**Europäisches Patentamt**

(19) **European Patent Office**

**Office européen des brevets**

(11) Veröffentlichungsnummer : **0 227 847**
**B1**

(12) **EUROPÄISCHE PATENTSCHRIFT**

(45) Veröffentlichungstag der Patentschrift :
**27.07.88**

(51) Int. Cl.⁴ : **B 01 D 25/14**

(21) Anmeldenummer : **85114920.3**

(22) Anmeldetag : **25.11.85**

(54) **Filterschichtanordnung und Verfahren zu deren Herstellung.**

(43) Veröffentlichungstag der Anmeldung :
**08.07.87 Patentblatt 87/28**

(45) Bekanntmachung des Hinweises auf die Patenterteilung : **27.07.88 Patentblatt 88/30**

(84) Benannte Vertragsstaaten :
**AT BE CH DE FR GB IT LI LU**

(56) Entgegenhaltungen :
**EP-A- 0 053 779**
**CH-A- 529 579**
**DE-A- 1 921 573**
**DE-A- 2 209 964**

(73) Patentinhaber : **Filtrox-Werk A.G.**
**Moosmühlenstrasse 6**
**CH-9030 St. Gallen (CH)**

(72) Erfinder : **Giger, Karl**
**Weidstrasse 7**
**CH-9302 Kronbühl (CH)**

(74) Vertreter : **Steudtner, Werner, Dipl.-Ing.**
**Lindenhof 5**
**CH-8604 Hegnau bei Zürich (CH)**

**Beschreibung**

Die Erfindung bezieht sich auf eine Filterschichtanordnung für Filterpressen mit zwei zur Bedeckung von je einer Filterplattenseite vorgesehenen Filterschichtteilen und einer zum Ueberängen der Filterschichtanordnung über eine Filterplatte bzw. einen Filterrahmen vorgesehenen Verbindung zwischen den beiden Filterschichtteilen in Form eines die beiden Filterschichtteile einstückig miteinander verbindenden Rückens sowie auf ein Verfahren zur Herstellung einer solchen Filterschichtanordnung.

Filterschichtanordnungen dieser Art sind unter der Bezeichnung Faltschichten allgemein bekannt. Die bekannten Faltschichten bestehen in der Regel aus einem bei der Herstellung ebenen Filterschichtzuschnitt mit zwei für die beiden Filterschichtteile vorgesehenen Schichtbereichen und einem zwischen diesen beiden Schichtbereichen gelegenen, für den Rücken vorgesehenen dritten Schichtbereich, der durch zwei parallele, den Rücken begrenzende Faltrillen gegen die beiden anderen Schichtbereiche abgegrenzt ist und innerhalb dessen in manchen Fällen noch ein oder mehrere weitere parallel zu den beiden den Rücken begrenzenden Faltrillen verlaufende Faltrillen angebracht sind.

Diese bekannten Faltschichten haben, wie schon aus der CH-A-506.316, Sp.1, Z.9-36, hervorgeht, den Nachteil, dass sie beim Einhängen in die Filterpresse und ferner auch im bereits eingehängten Zustand beim Oeffnen der Filterpresse an den Faltstellen, und zwar insbesondere an den beiden äusseren, durch die den Rücken begrenzenden Faltrillen vorgegebenen Faltstellen, leicht einreissen oder sogar abreissen. Die Ursachen für dieses Ein- oder Abreissen liegen einerseits darin, dass gerade an den Faltstellen und besonders an den beiden äusseren Faltstellen sowohl beim Einhängen in die Filterpresse als auch beim Oeffnen der Filterpresse die höchsten Belastungen auftreten und andererseits darin, dass die Faltstellen aus verschiedenen Gründen mechanisch besonders schwache Stellen sind. Die genannten höchsten Belastungen an den Faltstellen treten deswegen auf, weil die Faltschicht beim Einlegen in die Filterpresse an den äusseren Enden ihrer Faltstellen gefasst wird und dadurch das Gesamtgewicht der Faltschicht auf die beiden Endbereiche der Faltstellen einwirkt und weil beim Oeffnen der Filterpresse die Faltschicht nass ist und daher erstens die Festigkeit der Faltschicht gegenüber der einer trockenen Faltschicht von vornherein vermindert ist und diese Festigkeitsverminderung sich natürlich besonders auf die ohnehin schon durch die Faltrillen in ihrer Festigkeit geschwächten Faltstellen auswirkt und zweitens die nassen Filterflächen der eingehängten Faltschicht ein relativ grosses Gewicht haben und daher die beiden äusseren, durch die den Rücken begrenzenden Faltrillen vorgegebenen Faltstellen, an denen ja die Filterflächen mit ihrem ganzen Gewicht hängen, einer sehr starken Zugbelastung ausgesetzt sind und drittens beim Oeffnen der Filterpresse durch Haftung der Pressrahmen an den Faltschichten vor ihrer Ablösung von denselben noch eine weitere unmittelbar an diesen äusseren Faltstellen angreifende, in Oeffnungsrichtung wirkende Zugbelastung von in manchen Fällen ganz beträchtlicher Höhe auftritt. Dass die Faltstellen mechanisch besonders schwache Stellen sind, liegt - wie eingehende Untersuchungen gezeigt haben - in erster Linie daran, dass beim Einprägen der Faltrillen in den Filterschichtzuschnitt unterhalb der Faltrillen beträchtliche Gefügeschäden insbesondere in Form von Rissen der die Schichtbereiche beiderseits der Faltrille vor dem Einprägen verbindenden Fasern auftreten. Erschwerend kommt hinzu, dass das Filterschichtmaterial relativ locker und die mechanische Festigkeit desselben daher ohnehin relativ gering ist, dass zudem der Schichtquerschnitt gerade an den Faltstellen durch die Einprägung der Faltrillen verringert und dadurch die mechanische Festigkeit an diesen Faltstellen noch weiter herabgesetzt ist und dass ausserdem beim Falten genau wie bei jedem anderen Biegevorgang die äussere Filterschichtseite im Bereich der Faltzone gestreckt und die innere Filterschichtseite gestaucht wird und durch diese Streckungen und Stauchungen weitere Schäden im inneren Gefüge der Filterschicht in der Faltzone auftreten, die wegen der geringen Elastizität, Streck- und Stauchbarkeit häufig bis zu inneren Gefügerissen im Streckungbereich (infolge Zerreissens der beim Einprägen der Faltrillen noch nicht zerrissenen, die Schichtbereiche beiderseits der Faltrille verbindenden Fasern) und zu Zerbröckelungen im Stauchungsbereich gehen.

Da an dem Faktum, dass an den Faltstellen die höchsten Belastungen auftreten, nichts zu ändern war, schien die einzige Möglichkeit zu einer Verbesserung der bekannten Faltschichten darin zu liegen, die mechanisch besonders schwachen Faltstellen auf irgendeine Weise zu verstärken. Diese naheliegende Lösung der bei den bekannten Faltschichten auftretenden Schwierigkeiten ist in der CH-A-506.316 beschrieben. Dort ist zur Beseitigung dieser Schwierigkeiten ein flexibles, den Faltrücken und die Faltrillen verstärkendes Verfestigungsmittel vorgesehen, das sich längs und quer zum Faltrücken bis oder nahe an den wirksamen Bereich der Filterflächen erstreckt. Als Verfestigungsmittel ist dabei eine innerhalb des Schichtengefüges eingebettete Gewebelage vorgesehen, die auf der Schichtseite angeordnet wird, die der mit Faltrillen versehenen Schichtseite gegenüberliegt. Damit liess sich zwar hinsichtlich der Einreissgefahr eine gewisse Verbesserung erzielen, jedoch war die erwähnte Abreissgefahr damit noch nicht beseitigt, im Gegenteil trat gerade diese Abreissgefahr in erhöhtem Masse auf. Denn durch die auf einer Schichtseite eingebettete Gewebelage aus im wesentlichen dehnungsfestem Gewebe wurde der Bereich im Querschnitt der Faltzone, an dem beim Falten keine Streckung und auch keine Stauchung auftritt und der normalerweise bei im wesentlichen homogenem Material in der Mitte zwischen den beiden Schichtseiten liegt, nach der einen Schichtseite zu in den Bereich der eingebetteten dehnungsfesten Gewebelage verlagert, was wiederum zur Folge hatte, dass der Abstand zwischen diesem streckungs- und stauchungsfreien Bereich und der anderen Schichtseite beinahe auf das Doppelte vergrössert wurde, so dass die beim Falten auftretende Streckung bzw. Stauchung im Bereich dieser anderen Schichtseite nahezu verdoppelt wurde. Es ist klar, dass diese doppelte Streckung erst recht und nunmehr endgültig zu Gefügerissen der Filterschicht in der Faltzone führte bzw. dass diese doppelte Stauchung umfangreiche Zerbröckelungen des Gefüges in der Faltzone zur Folge hatte. Diese auf das Doppelte vergrösserten Gefügeschäden führten dazu, dass über die Filterschicht selbst in der Faltzone praktisch nahezu keine Zugkräfte mehr übertragen wurden und damit nahezu die gesamten Zugkräfte über die eingebettete Gewebelage zu übertragen waren. Beim Oeffnen der Filterpresse entstanden daher an den Uebergangsflächen zwischen Filterschichtmaterial und eingebetteter Gewebelage wegen des relativ grossen Gewichts der herabhängenden nassen Filterflächen und in manchen Fällen auch wegen starker Haftung der Filterschichten am sich in Oeffnungsrichtung wegbewegenden Pressrahmen ganz erhebliche Scherkräfte, die das an das Gewebe angrenzende Filterschichtmaterial nicht aushalten konnte und die daher zur Ablösung der Filterschicht von der eingebetteten Gewebelage und damit zum Abreissen der herabhängenden nassen Filterflächen führte. Zwar hat man diesen Nachteil dadurch zu beseitigen versucht, dass man für die Gewebelage ein sehr lockeres Gewebe mit mehr als 50 % freier Fläche, d.h. also einer Porösität von über 50 %, verwendet hat, in der Hoffnung, dass das Filterschichtmaterial die Gewebelage an den porösen Stellen durchsetzen würde und sich dadurch die Scherbelastungsfähigkeit an den Uebergangsflächen zwischen Filterschichtmaterial und eingebetteter Gewebelage erhöhen würde. Diese Hoffnungen konnten sich jedoch nicht oder wenigstens nicht in nennenswertem Masse erfüllen, weil die Kraftübertragung innerhalb von Filterschichten hauptsächlich durch die faserigen Bestandteile des Filterschichtmaterials bewerkstelligt wird und die Wahrscheinlichkeit, dass diese Fasern bei der Herstellung der Filterschicht mit eingebetteter Gewebelage durch die Löcher in dem Gewebe hindurchgehen, schon wegen der relativ grossen Länge dieser Fasern ausserordentlich gering ist. Die Fasern nehmen vielmehr bei der Herstellung eine im wesentlichen zu dem Gewebe parallele Lage ein und die Löcher in dem Gewebe werden praktisch nur von den als Füllstoff bezeichneten Bestandteilen der Filterschicht ausgefüllt, deren Beanspruchbarkeit auf Scherkräfte Ja bekanntlich relativ gering ist. Die Abreissgefahr beim Oeffnen der Filterpresse konnte daher auch durch die Verwendung ein sehr lockeren Gewebes für die Gewebelage nicht beseitigt werden.

In der richtigen Erkenntnis, dass die in der CH-A-506.316 beschriebene Einbettung einer Gewebelage in die Filterschicht im Bereich des Faltrückens und seiner Umgebung nicht das richtige Mittel ist, um die bei den bekannten Faltschichten auftretenden Schwierigkeiten zu überwinden, wurde daher später auf die Einbettung einer Gewebelage in die Faltschichten wieder verzichtet. Stattdessen wurde auf die Rückenaussenseite der Faltschicht und die beiderseits an die Aussenseite des Faltrückens angrenzenden Bereiche der Filterschicht ein sich bis nahe an den wirksamen Bereich der Filterflächen erstreckendes, aus einem ganz dünnen einseitig mit einem Polyäthylenhaftstoff beschichteten Polypropylenvlies bestehendes Band aufgeklebt, das die zuvor der eingebetteten Gewebelage zugedachte Aufgabe nunmehr erfüllen sollte. Mit diesem aufgeklebten Band liessen sich auch gewisse Verbesserungen im Sinne einer Verminderung der Abreissgefahr im Vergleich zu der eingebetteten Gewebelage erreichen, weil sich erstens bei dem in einer Art Aufbügelverfahren mit Schmelzverflüssigung und anschliessender Erstarrung des Polyäthylenhaftstoffes erfolgenden Aufkleben des Bandes eine bessere Haftung und damit eine höhere Scherbeanspruchbarkeit als bei dem blossen Einbetten der Gewebelage und der damit letztlich nur auf Haftreibung basierenden Scherbeanspruchbarkeit der eingebetteten Gewebelage ergibt und weil zweitens das Band selbst aufgrund seiner vliesartigen Ausbildung im Gegensatz zu der eingebetteten Gewebelage aus im wesentlichen dehnungsfestem Gewebe etwas dehnbar ist und daher die oben erwähnte Verlagerung des normalerweise in der Schichtmitte liegenden, beim Falten streckungs- und stauchungsfreien Bereiches nach der eingebetteten Gewebelage zu bei dem etwas dehnbaren Band geringer als bei der dehnungsfesten eingebetteten Gewebelage ist und entsprechend dieser geringeren Verlagerung auch die erwähnte Vergrösserung der Stauchung auf der anderen Schichtseite und der durch die Stauchung verursachten Zerbröckelungen des Gefüges in der Faltzone bei dem aufgeklebten Band geringer als bei der eingebetteten Gewebelage ist und weil drittens die oben erwähnte Haftung der Pressrahmen an den Filterschichten beim Oeffnen der Filterpresse an dem aufgeklebten Band wahrscheinlich wegen dessen geringerer Aufnahmefähigkeit für klebende Anteile des Unfiltrats geringer ist und sich daher auch eine Verminderung der auf diese Haftung zurückzuführenden, an den äusseren Faltstellen angreifenden, in Oeffnungsrichtung der Filterpresse wirkenden Zugbelastung ergibt, aber trotzalledem konnte auch der Ersatz der eingebetteten Gewebelage durch das aufgeklebte Band die Abreissgefahr nicht völlig beseitigen, weil das Schichtmaterial im Bereich der Faltzonen durch die Faltrillen und die Faltung längs derselben nach wie vor derart geschwächt wurde, dass auch bei den Faltschichten mit aufgeklebtem Band ebenso wie bei den Faltschichten mit eingebetteter Gewebelage über die Filterschicht selbst in der Faltzone nur ein geringer Teil der Zugbelastung übertragen werden konnte und daher der grösste Teil der Zugbelastung über das aufgeklebte Band zu übertragen war und infolge dieser hohen Zugbelastung die Beanspruchbarkeit der Verbindung zwischen aufgeklebtem Band und Filterschicht für eine völlige Beseitigung der Abreissgefahr nicht ausreichend war. Das lag nicht daran, dass die Scherbeanspruchbarkeit der zwischen Band und Filterschicht bestehenden Klebverbindung selbst nicht ausreichend gewesen wäre, sondern in erster Linie daran, dass das Schichtmaterial unterhalb der Eindringtiefe des Klebstoffs keine ausreichende Scherbeanspruchbarkeit aufwies und sich daher das Band samt Klebstoff und mit diesem am Band festgeklebten oberflächlichen Schichtenmaterial vom Untergrund, also von dem Schichtmaterial unterhalb der Eindringtiefe des Klebstoffs, löste. Auch eine bekannte Weiterbildung der Faltschichten mit aufgeklebtem Band in der Form, dass anstelle von nur zwei die Innenseite des Faltrückens begrenzenden parallelen Faltrillen 2n Faltrillen auf der Rückeninnenseite und 2n-1 gegen die inneren Faltrillen versetzt angeordnete Faltrillen auf der Rückenaussenseite vorgesehen wurden und damit eine Art wellenförmige Ausbildung des Faltrückens geschaffen wurde, konnte hinsichtlich der unzureichenden Scherbeanspruchbarkeit des Untergrundes unterhalb der Eindringtiefe des Klebstoffs des aufgeklebten Bandes und der infolgedessen weiterbestehenden Abreissgefahr keine Abhilfe schaffen, weil die Faltwinkel bei einem solchen wellenförmigen Faltrücken im Gegensatz zu den nur 90° betragenden Faltwinkeln bei nur zwei die Innenseite des Faltrükkens begrenzenden Faltrillen mindestens zum Teil grösser als 90° sein müssen und sich daher beim Einprägen der auf der Rückeninnenseite angeordneten Faltrillen in den Filterschichtzuschnitt sowie beim danach erfolgenden Falten unterhalb der Faltrillen mit einem grösseren Faltwinkel als 90° grössere Gefügeschäden in Form von Rissen der die Schichtbereiche beiderseits der Faltrille vor dem Einprägen verbindenden Fasern als bei nur zwei die Innenseite des Faltrückens begrenzenden Faltrillen und einer Faltung derselben mit Faltwinkeln von 90° ergeben.

Parallel zu der Entwicklung im Rahmen der durch die CH-A-506.316 vorgegebenen Grundkonzeption, die mechanisch besonders schwachen Faltstellen der bekannten Faltschichten auf irgendeine Weise zu verstärken, erfolgte die Entwicklung einer anderen Grundkonzeption zur Verbesserung der bekannten Faltschichten, deren Grundgedanke es war, solche Faltstellen überhaupt zu vermeiden und auf diese Weise alle zuvor durch die Faltrillen verursachten Schwierigkeiten zu überwinden. Die Vermeidung von Faltstellen wurde bei dieser anderen Grundkonzeption im Prinzip dadurch erreicht, dass anstelle von einer gefalteten Doppel Filterschicht zwei Einzelfilterschichten verwendet wurden, die durch gesonderte, ausserhalb des Einspannbereiches der Filterschichten angeordnete faltbare Verbindungsmittel miteinander zu einer faltbaren Doppel-Filterschicht verbunden wurden. Filterschichtanordnungen entsprechend dieser anderen Grundkonzeption sind beispielsweise aus der CH-A-529.579, der DE-A-22 44 876 und der EI-A-0053 779 bekannt. Die Entwicklung im Rahmen dieser Grundkonzeption begann mit einem bandförmigen zusammenfaltbaren Verbindungsglied zwischen den beiden Einzelfilterschichten von der Breite der Filterschichtanordnung entsprechender Länge, das an Randzonen der beiden Filterschichten ausserhalb des Einspannbereiches durch Nähte, Klammern oder andere Befestigungsmittel oder auch durch Klebung befestigt war und sich mit seinem mittleren, die Grenzlinien zwischen Einspannbereichen und Randzonen der beiden Filterschichten verbindenden Teil auf der Filterplatte bzw. dem Filterrahmen abstützte, und setzte sich mit der einen geringeren technischen Aufwand verursachenden Verbindung der genannten Grenzlinien durch eine die beiden Filterschichten verbindende und in einem der Dicke der Filterplatte bzw. des Filterrahmens entsprechenden Abstand voneinander haltende, sich auf der Filterplatte bzw. dem Filterrahmen abstützende Naht von einer der Breite der Filterschichtanordnung entsprechenden Länge fort und endete schliesslich mit der nochmals eine wesentliche Aufwandsverminderung mit sich bringenden Verbindung der genannten Grenzlinien der beiden Filterschichten durch eine Vielzahl von auf die Breite der Filterschichtanordnung verteilten Einzelfäden, die einander gegenüberliegende Punkte auf den beiden Grenzlinien miteinander verbinden und an diesen Punkten die Filterschichten im wesentlichen lotrecht zu deren Schichtfläche durchstossen und die an ihren beiden Enden mit ein Durchrutschen des Einzelfadens durch die Filterschichten verhindernden Halteorganen verbunden sind, wobei für die Einzelfäden marktübliche Etikettenbefestigungsorgane und zur Anbringung derselben marktübliche Heftapparate verwendet wurden. Mit diesen im Rahmen der Grundkonzeption der Vermeidung von Faltstellen bzw. Faltrillen entwickelten bekannten Filterschichtanordnungen konnten die bei den zuvor erörterten, im wesentlichen aus einer gefalteten Doppelschicht bestehenden Faltschichten entstandenen Schwierigkeiten hinsichtlich der Einreissund Abreissgefahr an den Faltstellen und des zur Verringerung dieser Gefahr erforderlichen Transportes der Faltschichten im ungefalteten Zustand vollständig beseitigt werden, aber der technische Aufwand für die gesonderten Verbindungsmittel und insbesondere deren Anbringung an den beiden Einzelfilterschichten war natürlich höher als der für die Anbringung der Faltrillen bei den zuvor erörterten Faltschichten erforderliche technische Aufwand, so dass die Ueberwindung der genannten Schwierigkeiten letztlich mit einem erhöhten technischen Aufwand erkauft werden musste.

Der Erfindung lag daher die Aufgabe zugrunde, eine Filterschichtanordnung der eingangs genannten Art und ein Verfahren zu deren Herstellung zu schaffen, mit denen einerseits ebenso wie mit der zuvor erörterten Grundkonzeption der Vermeidung von Faltstellen die oben erläuterten, bei den bekannten Faltschichten auftretenden Schwierigkeiten hinsichtlich der Einreiss- und Abreissgefahr an den Faltstellen und des zur Verringerung dieser Gefahr erforderlichen Transportes der Faltschichten im ungefalteten Zustand vollständig beseitigt werden können und die andererseits aber keinen erhöhten technischen Aufwand für die Ueberwindung dieser Schwierigkeiten erfordern sondern mit etwa dem gleichen Herstellungsaufwand wie die oben erörterten bekannten Faltschichten hergestellt werden können.

Erfindungsgemäss wird das bei einer Filterschichtanordnung der eingangs genannten Art dadurch erreicht, dass die Filterschichtanordnung im Bereich ihres Rückens über die gesamte Breite desselben auf eine unter der Schichtdicke der Filterschichtteile liegende Dicke zusammengepresst ist.

Hauptvorteil der vorliegenden Filterschichtanordnung ist, dass sie keine Faltrillen mehr aufweist und damit die Hauptursache für die zur Einreiss- und Abreissgefahr bei den oben erörterten bekannten Faltschichten führende beträchtliche mechanische Schwächung an den Faltstellen, nämlich die beim Einprägen von Faltrillen in den Filterschichtzuschnitt unterhalb der Faltrillen entstehenden erheblichen Gefügeschäden in Form von Rissen der die Schichtbereiche beiderseits der Faltrille vor dem Einprägen verbindenden Fasern, beseitigt ist. Denn beim Zusammenpressen des Rückens über seiner gesamten Breite gemäss der vorliegenden Erfindung werden die im Schichtgefüge innerhalb des Rückenbereiches befindlichen Fasern nicht wie beim Einprägen einer Faltrille über ihre maximale Beanspruchbarkeit in Dehnungsrichtung hinaus gedehnt sondern im Prinzip nur ohne jede Dehnung parallel verlagert, so dass der gesamte Rückenbereich und die daran angrenzenden Filterschichtbereiche im Prinzip die gleiche Festigkeit wie alle übrigen Filterschichtbereiche der Doppelschicht und in der Praxis wegen der sich mit dem Zusammenpressen ergebenden Verdichtung und der daraus resultierenden geringeren Aufnahmefähigkeit für Flüssigkeiten häufig sogar eine grössere Nassfestigkeit als die übrigen Filterschichtbereiche der Doppelschicht haben. Aus diesem Hauptvorteil, dass die im Schichtgefüge innerhalb des Rückenbereiches befindlichen Fasern bei der Bildung des Rückens nicht gedehnt werden und daher auch nicht reissen und demgemäss im Rückenbereich und den angrenzenden Filterschichtbereichen kein Festigkeitsverlust und keine Schwachstellen auftreten, ergibt sich der weitere wesentliche Vorteil, dass auf die bei den zuvor erörterten Faltschichten zur Verstärkung der Faltstellen erforderlichen Verfestigungsmittel wie die eingebettete Gewebelage usw. verzichtet werden kann, was wiederum den Vorteil geringerer Herstellungskosten mit sich bringt.

Bei einer bevorzugten Ausbildungsform der vorliegenden Filterschichtanordnung geht die Schichtdicke in den beiden Uebergangsbereichen von den beiden Filterschichtteilen auf einen zentralen Bereich des Rückens unter Ausschluss von sprunghaften Dickenänderungen stetig von der Schichtdicke der beiden Filterschichtteile auf die Dicke im zentralen Bereich des Rückens über. Das hat den Vorteil, dass auch in diesen Uebergangsbereichen praktisch keine Dehnung der im Schichtgefüge innerhalb dieser Uebergangsbereiche befindlichen Fasern auftritt und demgemäss auch in diesen Uebergangsbereichen kein Festigkeitsverlust zu verzeichnen ist.

Vorzugsweise ist der Rücken der vorliegenden Filterschichtanordnung im gebrauchsfertigen, im Querschnitt n-förmigen Zustand derselben auf seiner die Rückeninnenseite bildenden Seite runzelig, wobei die Vertiefungen der beim Falten der Filterschichtanordnung in diesen im Querschnitt n-förmigen Zustand entstehenden Runzeln in den durch die Schichtstruktur auf der Rückeninnenseite vorgegebenen, die Rückeninnenseite netzartig überziehenden linienhaften Bereichen geringster Steifigkeit der Schichtstruktur auf der Rückeninnenseite liegen, so dass diese natürliche Runzelbildung im Gegensatz zu künstlich angebrachten und infolgedessen auch in die Schichtstrukturbereiche hoher Festigkeit einschneidenden Faltrillen die Festigkeit des Rückens nicht wesentlich beeinflusst. Der Vorteil ist auch hier wiederum eine weitgehende Vermeidung irgendwelcher Stellen verminderter Festigkeit als Folge des Faltvorgangs.

In bestimmten Anwendungsbereichen der vorliegenden Filterschichtanordnung, insbesondere für die Filtrierung von klebrige Anteile enthaltenden Flüssigkeiten, kann es ferner von Vorteil sein, wenn auf dem Rücken auf seiner im gebrauchsfertigen Zustand der Filterschichtanordnung die Rückenaussenseite bildenden Seite sowie auf den beiderseits an den Rücken angrenzenden Filterschichtbereichen der beiden Filterschichtteile, vorzugsweise mittels eines Klebemittels, ein Band aufgebracht ist, das vorzugsweise von einem aus Polypropylenfasern bestehenden Vlies gebildet ist und vorzugsweise mit einem als Klebemittel dienenden Polyäthylenhaftmittel beschichtet ist. Der Vorteil eines solchen Bandes liegt bei der vorliegenden Filterschichtanordnung in erster Linie in dem schon oben im Zusammenhang mit den bekannten Faltschichten erwähnten Effekt, dass die sich beim Oeffnen der Filterpresse ergebende Haftung der Pressrahmen an den Filterschichten bzw. an dem auf diese aufgeklebten Band wesentlich geringer als ohne ein solches Band ist und sich daher auch eine entsprechende Verminderung der auf diese Haftung zurückzuführenden in Oeffnungsrichtung der Filterpresse wirkenden Zubelastung auf die Filterschichten beim Oeffnen der Filterpresse ergibt.

Die Erfindung bezieht sich weiter auf ein Verfahren zur Herstellung der vorliegenden Filterschichtanordnung, das sich dadurch auszeichnet, dass ein im wesentlichen ebener Filterschichtzuschnitt mit zwei für die beiden Filterschichtteile vorgesehenen Schichtbereichen und einem zwischen diesen beiden Schichtbereichen gelegenen, für den Rücken vorgesehenen dritten Schichtbereich in diesem dritten Schichtbereich über die gesamte Breite desselben in im wesentlichen zur Ebene des Filterschichtzuschnittes senkrechter Richtung zusammengepresst wird.

Vorteilhaft kann dabei das Zusammenpressen des dritten Schichtbereiches mit einem während des Zusammenpressens stetig bis auf einen mittleren Flächendruck zwischen 50 und 5000 N/cm$^2$, vorzugsweise zwischen 500 und 2500 N/cm$^2$, anwachsenden Druck erfolgen. Der Vorteil eines solchen stetig anwachsenden Druckes ist, dass jede Möglichkeit von Gefügezerstörungen im Schichtmaterial von der Art, wie sie bei einem abrupten Druckanstieg auftreten können, ausgeschlossen wird.

Zweckmässig kann der dritte Schichtbereich bei dem vorliegenden Verfahren während des Vorganges des Zusammenpressens bis auf eine minimale Dicke im zentralen Teil desselben von weniger als dem 0,6-fachen, vorzugsweise von weniger als dem 0,4-fachen, der Schichtdicke in den für die beiden Filterschichtteile vorgesehenen Schichtbereicnen zusammengepresst werden. Eine solche relativ starke Zusammenpressung ist deswegen von Vorteil, weil die Zusammenpressung nach der Druckentlastung teilweise wieder zurückgeht und natürlich auch danach noch eine merkbare Reduktion der Schichtdicke im Rückenbereich verbleiben sollte.

Bei einer vorteilhaften Ausbildungsform des vorliegenden Verfahrens wird der dritte Schichtbereich gleichzeitig auf seiner gesamten Länge mittels einer Presse, vorzugsweise einer Kurbeloder Exzenterpresse, zwischen einer auf der als Rückenaussenseite vorgesehenen Seite des dritten Schichtbereiches angeordneten ebenen Auflagefläche von mindestens gleicher Länge und grösserer, vorzugsweise mindestens doppelter Breite wie der des dritten Schichtbereiches und einer auf der als Rückeninnenseite vorgesehenen Seite des dritten Schichtbereiches angeordneten Profilschiene von ebenfalls mindestens gleicher Länge wie der des dritten Schichtbereiches zusammmengepresst, wobei die der ebenen Auflagefläche zugewandte Seite der Profilschiene in die als Rückeninnenseite vorgesehene Seite des dritten Schichtbereiches eingepresst wird. Der Vorteil dieser Verfahrensform liegt in der wegen des gleichzeitigen Zusammenpressens des dritten Schichtbereiches auf seiner gesamten Länge erzielbaren relativ grossen Arbeitsgeschwindigkeit.

Bei einer Variante der vorgenannten vorteilhaften Ausbildungsform des vorliegenden Verfahrens wird der dritte Schichtbereich ebenfalls gleichzeitig auf seiner gesamten Länge mittels einer Presse, vorzugsweise einer Kurbeloder Exzenterpresse, zusammengepresst, jedoch in diesem Fall zwischen zwei auf den beiden Seiten des dritten Schichtbereiches angeordneten Profilschienen von jeweils mindestens gleicher Länge wie der des dritten Schichtbereiches, wobei die Profilschienen mit ihren einander zugewandten Seiten in beide Seiten des dritten Schichtbereiches eingepresst werden. Diese Variante eignet sich besonders für Filterschichtzuschnitte mit relativ grosser Schichtdicke und hat den gleichen Vorteil der Erzielbarkeit grosser Arbeitsgeschwindigkeiten wie die zuvor erwähnte vorteilhafte Ausbildungsform des vorliegenden Verfahrens.

Bei der bevorzugten Ausbildungsform des vorliegenden Verfahrens jedoch wird der dritte Schichtbereich zwischen einer auf der als Rückeninnenseite vorgesehenen Seite des dritten Schichtbereiches längs des dritten Schichtbereiches ablaufenden Profilrolle von einem vorzugsweise über der 50-fachen Schichtdicke der als Filterschichtteile vorgesehenen Schichtbereiche liegenden Rollendurchmesser und einer Gegenrolle oder einer ebenen Auflagefläche zusammengepresst, wobei die der Gegenrolle bzw. der Auflagefläche zugewandte Seite der Profilrolle in die als Rückeninnenseite vorgesehene Seite des dritten Schichtbereiches eingepresst wird. Der Vorteil dieser bevorzugten Ausbildungsform des vorliegenden Verfahrens liegt darin, dass sie bei entsprechend angepasster Drehzahl der Profilrolle eine kontinuierliche Verarbeitung der von einer Anlage zur Herstellung von Filterschichten gelieferten Filterschichtzuschnitte mit der Produktionsgeschwindigkeit der Anlage angepasster Arbeitsgeschwindigkeit und damit eine Kombination der Einrichtung zum Zusammenpressen des dritten Schichtbereiches mit dieser Anlage als letzte Station derselben erlaubt und dass der konstruktive Aufwand für die Einrichtung zum Zusammenpressen des dritten Schichtbereiches wesentlich niedriger als bei einer Presse ist, weil hier nicht gleichzeitig der gesamte dritte Schichtbereich sondern nur der momentan unter der Profilrolle befindliche Teil desselben zusammengepresst wird und daher die erforderliche Presskraft wesentlich geringer als bei einer Presse ist und dementsprechend auch ein wesentlich leichterer Aufbau als bei einer Presse möglich ist. Ausserdem hat diese bevorzugte Ausbildungsform des vorliegenden Verfahrens noch den Vorteil, dass sich bei einer auf dem dritten Schichtbereich ablaufenden Profilrolle das obengenannte erwünschte stetige Anwachsen des die Zusammenpressung des dritten Schichtbereiches bewirkenden Druckes von selbst ergibt und somit keine Massnahmen zur Verhinderung eines abrupten Druckanstieges getroffen werden müssen.

Als in den dritten Schichtbereich einzupressendes Profilelement wird bei dem vorliegenden Verfahren zweckmässig ein solches verwendet, dessen Querschnittsprofil stirnseitig mindestens bis zur Einpresstiefe in den dritten Schichtbereich kantenfrei ist und eine Profillinie aufweist, die im zentralen Teil des dritten Schichtbereiches im wesentlichen parallel zur Ebene des Filterschichtzuschnitts verläuft und in den beiden Uebergangsbereichen vom zentralen Teil des dritten Schichtbereiches zu den an diesen angrenzenden anderen beiden Schichtbereichen zumindest auf einem Teil ihrerim Uebergangsbereich liegenden Länge gekrümmt ist und in diesen Krümmungsbereichen ausschliesslich Krümmungsradien hat, die grösser als die Schichtdicke der als Filterschichtteil vorgesehenen Schichtbereiche und vorzugsweise mindestens gleich dem Doppelten dieser Schichtdicke sind. Der Vorteil der Verwendung eines solchen Profilelementes, also einer solchen Profilschiene oder -rolle, liegt darin, dass bei den grossen Krümmungsradien im Querschnittsprofil des Profilelementes eine Dehnung der Fasern innerhalb des Schichtengefüges in Bereich der Zusammenpressung und damit auch ein Reissen derselben praktisch ausgeschlossen ist, so dass ein Festigkeitsverlust infolge des Zusammenpressens nicht auftreten kann.

Anhand der nachstehenden Figuren ist die Erfindung im folgenden an einem Ausführungsbeispiel näher erläutert. Es zeigen

Fig. 1 einen Querschnitt durch den Rückenbereich und die angrenzenden Filterschichtbereiche der vorliegenden Filterschichtanordnung im Moment der stärksten Zusammenpressung des Rückenbereiches durch das dazu dienende, ebenfalls im Querschnitt gezeigte, von einer Profilschiene oder -rolle gebildete Profilelement

Fig. 2 einen Querschnitt durch die gleichen Bereiche der vorliegenden Filterschichtanordnung wie in Fig. 1 nach der Entlastung von dem Pressdruck

Fig. 3 einen Querschnitt einer zum Falten der in den Fig. 1 und 2 teilweise gezeigten Filterschichtanordnung geeigneten Faltleiste

Fig. 4 einen Querschnitt durch die gleichen Bereiche der vorliegenden Filterschichtanordnung wie in den Fig. 1 und 2 nach dem Falten und Ueberhängen der Filterschichtanordnung über eine Filterplatte

Fig. 5 eine Draufsicht auf einen Ausschnitt der Innenseite des Rückens der in Fig. 4 teilweise gezeigten gefalteten Filterschichtanordnung mit der für die vorliegende Filterschichtanordnung charakteristischen, sich beim Falten der Filterschichtanordnung ergebenden runzeligen Ausbildung der Rückeninnenseite.

Bei der Herstellung der vorliegenden Filterschichtanordnung wird ein von der Schichtenstrasse angelieferter ebener rechteckiger Filterschichtzuschnitt 1 mit zwei Schichtbereichen 2 und 3, die bei der fertigen Filterschichtanordnung 4 die zwei zur Bedeckung der beiden Seiten einer Filterplatte 5 vorgesehenen Filterschichtteile 6 und 7 bilden, und einem zwischen diesen beiden Schicht bereichen 2 und 3 gelegenen, für den Rücken 8 der Filterschichtanordnung 4 vorgesehenen dritten Schichtbereich 9, in diesem dritten Schichtbereich 9 über die gesamte Breite 10 desselben in im wesentlichen zur Ebene 11 des Filterschichtzuschnittes 1 senkrechter Richtung 12 zusammengepresst, und zwar in einem zentralen Teil 13 desselben bis auf etwa das 0,3-fache der ursprünglichen Schichtdicke 14 des Filterschichtzuschnitts 1 in diesem dritten Schichtbereich 9. Die Breite 10 des dritten Schicht-bereiches 9 beträgt dabei etwa das Doppelte der Plattendicke 15 der Filterplatte 5, für die die Filterschichtanordnung 4 vorgesehen ist, und die Breite 16 des zentralen Teiles 13 desselben etwa das 1- bis 1,2-fache dieser Plattendicke 15. Zwischen dem zentralen Teil 13 des dritten Schichtbereiches 9 und den beiden an den dritten Schichtbereich 9 angrenzenden Schichtbereichen 2 und 3 befindet sich je ein zum dritten Schichtbereich 9 gehörender Uebergangsbereich 17 bzw. 18, in denen das Schichtmaterial weniger als im zentralen Teil 13 des dritten Schichtbereiches 9 zusammengepresst wird, und zwar umso weniger, je näher die betrachtete Stelle der Schichtbereichsgrenze des dritten Schichtbereiches 9 bzw. des angrenzenden Schichtbereiches 2 oder 3 liegt. Die Breite dieser Uebergangsbereiche 17 und 18 beträgt je etwa das 0,4- bis 0,5-fache der Plattendicke 15 der Filterplatte 5, für die die Filterschichtanordnung 4 vorgesehen ist.

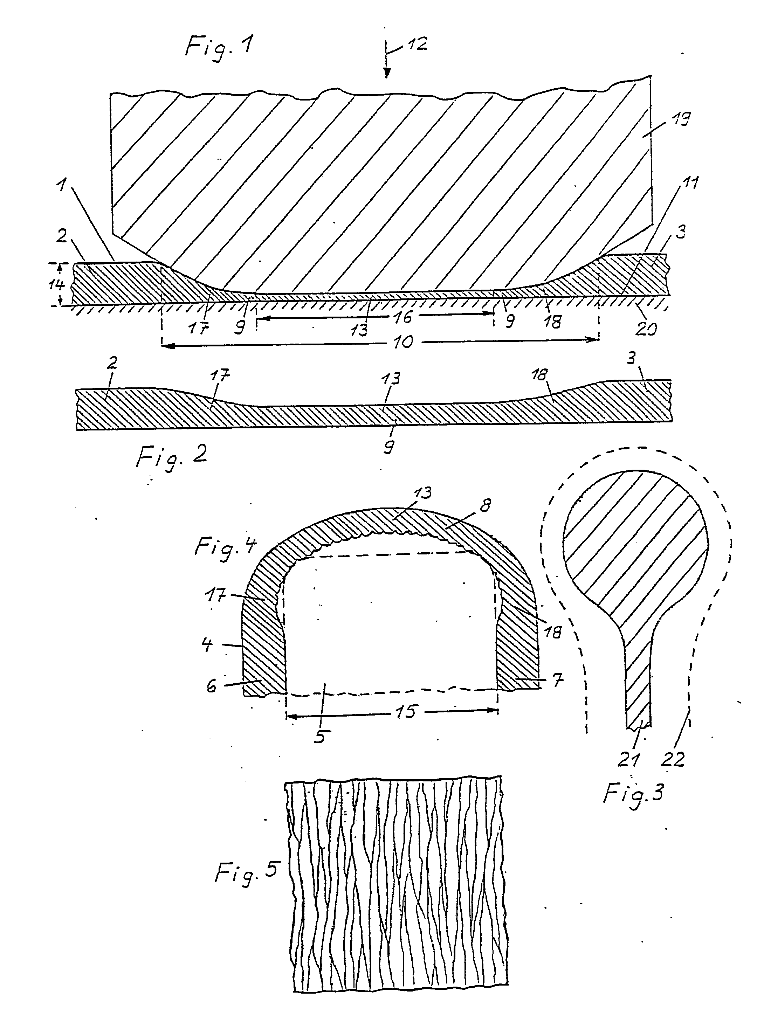

Zum Zusammenpressen des dritten Schichtbereiches 9 des Filterschichtzuschnittes 1 wird entweder eine Presse wie z.B. eine Kurbel- oder Exzenterpresse, die mit einer Profilschiene als in den dritten Schichtbereich 9 einzupressendes Profilelement 19 von mindestens gleicher Länge wie der Breite des Filterschichtzuschnitts 1 und einer ebenen Auflagefläche von ebenfalls mindestens gleicher Länge wie der Breite des Filterschichtzuschnitts 1 und grösserer, vorzugsweise mindestens doppelter Breite wie der Breite 10 des dritten Schichtbereiches 9 als Auflageelement 20 versehen ist und mit der der dritte Schichtbereich 9 gleichzeitig auf seiner gesamten Länge zusammengepresst wird, oder aber ein Rollenpaar mit einer Profilrolle von einem vorzugsweise über der 50-fachen Schichtdicke der Schichtbereiche 2 und 3 liegenden Rollendurchmesser und einer grösseren Breite als der Breite 10 des dritten Schichtbereiches 9 als Profilelement 19 und einer im stirnseitigen Abstand vom etwa 0,3-fachen der Schichtdicke 14 der Schichtbereiche 2 und 3 von der Profilrolle angeordneten Gegenrolle von vorzugsweise grösserem Rollendurchmesser als dem der Profilrolle und grösserer, vorzugsweise mindestens doppelter Breite wie der Breite 10 des dritten Schichtbereiches 9 als Auflageelement 20 verwendet. Beim Zusammenpressen des dritten Schichtbereiches 9 mit einer Presse entspricht der maximale Pressdruck einem mittleren Flächendruck, bezogen auf die Fläche des dritten Schitchtbereiches 9, zwischen 50 und 5000 $N/cm^2$, vorzugsweise zwischen 500 und 2500 $N/cm^2$, und es werden Presskräfte in der Grössenordnung von 2 bis 200 t, vorzugsweise von 20 bis 100 t zum Zusammenpressen des dritten Schichtbereiches 9 bis auf etwa das 0,3-fache seiner ursprünglichen Schichtdicke benötigt. Bei Verwendung eines Rollenpaares zum Zusammenpressen des dritten Schichtbereiches 9 ergibt sich in der in Fig. 1 dargestellten, in die Verbindungsebene zwischen den Achsen von Profilrolle und Gegenrolle fallenden Zone des dritten Schichtbereiches 9 ein etwa gleicher maximaler Pressdruck wie oben für die Verwendung einer Presse angegeben, aber die auf die Achslager von Profilrolle und Gegenrolle übertragenen Presskräfte liegen nur etwa in der Grössenordnung von 0,04 bis 4 t, vorzugsweise von 0,4 bis 2 t. Trotzdem ist es jedoch aufgrund der immerhin in der Grössenordnung von Tonnen liegenden, auf die Achslager von Profilrolle und Gegenrolle wirkenden Kräfte empfehlenswert, das Rollenpaar stationär zu lagern und die zum Ablaufen der Profilrolle auf dem dritten Schichtbereich erforderliche Relativbewegung zwischen Rollenpaar und Filterschichtzuschnitt dadurch zu bewirken, dass der Filterschichtzuschnitt zwischen den stationär gelagerten Rollen hindurchläuft.

Die Fig. 1 zeigt den dritten Schichtbereich 9 des Filterschichtzuschnitts 1 im Moment der stärksten Zusammenpressung durch das von Profilschiene oder -rolle gebildete Profilelement 19 und das von Auflagefläche oder Gegenrolle gebildete Profilelement 20.

Falls zum Zwecke einer besseren Ablösung des Pressrahmens von der Filterschichtanordnung beim Oeffnen der Filterpresse auf die Rückenaussenseite und die angrenzenden Filterschichtbereiche der Filterschichtanordnung das oben schon erwähnte Band aus einem aus Polypropylenfasern bestehenden und mit einem Polyäthylenhaftmittel beschichteten Vlies aufgebracht werden soll, so empfiehlt es sich, das Band entweder vor dem Zusammenpressen des dritten Schichtbereiches 9 des Filterschichtzuschnitts 1, z.B. in bekannter Weise durch eine Art Aufbügelverfahren, auf den Filterschichtzuschnitt 1 aufzubringen oder aber das Aufbringen des Bandes gleichzeitig mit dem Zusammenpressen des dritten Schichtbereiches 9 vorzunehmen. Im letzteren Fall müsste allerdings ein anders als das Profilelement 19 ausgebildetes Profilelement und ein auf die Schmelztemperatur des Polyäthylenhaftmittels aufheizbares Auflageelement 20 verwendet werden. Denn das Profilelement 19 erzeugt aufgrund seiner Ausbildung nur innerhalb des dritten Schichtbereiches 9 einen Pressdruck auf den Filterschichtzuschnitt 1 (das Profilelement 19 ist so gestaltet, dass es für beliebige Schichtdicken des Filterschichtzuschnitts verwendet werden kann), während zum Aufbringen des Bandes nicht nur innerhalb des dritten Schichtbereiches 9 sondern auch in den beiden angrenzenden Schichtbereichen 2 und 3 bis zur Breite des Bandes ein Pressdruck erzeugt werden müsste (und zwar in den Schichtbereichen 2 und 3 eine elastische Zusammendrückung von z.B. 2 bis 10 % der Schichtdicke) und das Profilelement somit auch in den Schichtbereichen 2 und 3 bis zur Breite des Bandes auf dem Filterschichtzuschnitt aufliegen müsste und entsprechend gestaltet sein müsste, und in diesem Falle wäre das Profilelement natürlich nur für eine einzige Schichtdicke verwendbar, so dass für jede mögliche Schichtdicke ein gesondertes Profilelement vorgesehen werden müsste und ausserdem auch die Dickentoleranz der Filterschichtzuschnitte relativ gering gehalten werden müsste. Die obenerwähnte-Möglichkeit, das Band gleichzeitig mit dem Zusammenpressen des dritten Schichtbereiches 9 auf den Filterschichtzuschnitt aufzubringen, kommt daher praktisch nur dann in Betracht, wenn überhaupt nur Filterschichtzuschnitte mit einer einzigen Schichtdicke (oder höchstens mit zwei verschiedenen Schichtdicken) hergestellt werden und bei der Herstellung ohnehin schon sehr geringe Schichtdickentoleranzen erzielt werden und somit keine zusätzlichen Massnahmen zur Erreichung der erforderlichen geringen Schichtdickentoleranzen notwendig sind.

Nach Entlastung des dritten Schichtbereiches 9 von dem beim Zusammenpressen auf ihn ausgeübten Druck nimmt der dritte Schichtbereich 9 die in Fig. 2 im Querschnitt gezeigte Form an, d.h. die bei der stärksten Zusammenpressung im zentralen Teil 13 des dritten Schichtbereiches 9 erreichte Reduktion der Schichtdicke auf das 0,3-fache der ursprünglichen Schichtdicke geht nach der Druckentlastung teilweise bis auf z.B. das 0,6-fache der ursprüng lichen Schichtdicke wieder zurück. Dieses Zurückgehen ist dadurch bedingt, dass die im Schichtgefüge befindlichen Fasern bei dem Zusammenpressen ja nicht gedehnt sondern nur zum Teil verlagert werden und daher nach dem Zusammenpressen auch nicht beschädigt sind und infolgedessen zum Teil aufgrund ihrer Elastizität versuchen, ihre alte Lage wieder einzunehmen. Daraus, dass nur ein Teil der Fasern in ihre alte Lage zurückkehren kann und das Zurückgehen von der 0,3-fachen auf die 0,6-fache Schichtdicke nur durch diesen Teil der Fasern bewirkt wird, ergibt sich jedoch, dass die Dichte des Schichtgefüges zumindest im zentralen Teil 13 des dritten Schichtbereiches 9 in Fig. 2 von unten nach oben abnehmen muss, d.h. es ergibt sich an der Unterseite dieses zentralen Teils 13 und damit an der später die Rückenaussenseite der Filterschichtanordnung 4 bildenden Seite ein komprimiertes dichtes Schichtgefüge mit einer hohen Faserdichte, das nach oben und damit nach der späteren Rückeninnenseite zu immer lockerer wird und infolgedessen den sich beim Falten oder genauer gesagt Biegen des zentralen Teils 13 ergebenden Stauchungen einen von der Rückenaussenseite nach der Rückeninnenseite zu immer geringer werdenden Widerstand entgegensetzt, und dieser Effekt ist im vorliegenden Zusammenhang von wesentlicher Bedeutung, weil andererseits ja die beim Biegen des zentralen Teiles 13 entstehenden Stauchungen nach der Rükkeninnenseite zu zunehmen und somit durch diesen Effekt bewirkt wird, dass diese beim Biegen des zentralen Teiles 13 entstehenden Stauchungen keine Gefügeschäden verursachen, sondern das vor dem Biegen von der Rückenaussenseite nach der Rückeninnenseite zu immer lockerer werdende Schichtgefüge sich beim Biegen in einem von der Rückenaussenseite nach der Rückeninnenseite zu immer stärkeren Masse verdichtet, so dass das Schichtgefüge am Ende des Biegevorganges im Idealfall im gesamten Bereich zwischen Rückenaussenseite und Rückeninnenseite eine annähernd gleiche Gefügedichte erreicht. Ausserdem wird durch den genannten Effekt auch bewirkt, dass innerhalb des Schichtgefüges der Bereich, in dem beim Biegen weder Streckungen noch Stauchungen auftreten, nahe der später die Rückenaussenseite bildenden Unterseite des zentralen Teiles 13 des dritten Schichtbereiches 9 in Fig. 2 liegt (und zwar etwa im Abstand vom 0,1- bis 0,2-fachen der ursprünglichen Schichtdicke von dieser Unterseite), so dass sich beim Biegen des zentralen Teiles 13 fast keine Streckung auf der Rückenaussenseite und damit auch keine durch Streckung verursachten Gefügeschäden ergeben. Das Zusammenpressen des dritten Schichtbereiches sowie das anschliessende teilweise Zurückgehen desselben schaffen also ideale Voraussetzungen für den anschliessend zum Zwecke des « Faltens » des Filterschichtzuschnittes 1 vorzunehmenden Vorgang der Biegung des dritten Schichtbereiches 9.

Die Biegung des dritten Schichtbereiches 9 zum Zwecke des « Faltens » des Filterschichtzuschnittes 1 wird über der in Fig. 3 gezeigten Faltleiste 21 vorgenommen, deren Länge etwas grösser als die Breite des Filterschichtzuschnitts 1 ist. Damit es bei diesem Biegen innerhalb des erwähnten, auf der Rückenaussenseite liegenden stark komprimierten dichten und daher auch entsprechend steifen Schichtgefüge nicht zu auf diese Steifigkeit zurückzuführende Gefügeschäden wie Rissbildungen oder einem Bruch kommt, empfehlen sich folgende Massnahmen vor bzw. während des Biegevorganges : Vor dem Biegevorgang sollte der dritte Schicht bereich 9, zumindest aber der zentrale Teil 13 desselben, zweckmässig leicht angefeuchtet werden, weil dadurch die Steifigkeit in dem besagten komprimierten dichten Schichtgefüge wesentlich herabgesetzt werden kann. Dieses Anfeuchten kann z.B. so erfolgen, dass der dritte Schichtbereich 9 auf seiner als Rückenaussenseite vorgesehenen Seite oder auch auf beiden Seiten vor Beginn des Biegevorganges bedampft wird, oder auch noch einfacher dadurch, dass eine mit Flüssigkeit getränkte Benetzungsrolle auf der als Rükkenaussenseite vorgesehenen Seite des dritten Schichtbereiches 9 abläuft. Diese Benetzungsrolle kann z.B. im Falle, dass das Zusammenpressen des dritten Schichtbereiches 9 mittels eines Rollenpaares erfolgt, am gleichen Ständer wie das Rollenpaar in Bewegungsrichtung des Filterschichtzuschnittes 1 hinter der Gegenrolle angeordnet werden. Wenn dieses Anfeuchten noch nicht ausreicht, um die Steifigkeit des besagten komprimierten dichten Schichtgefüges genügend herabzusetzen, kann der dritte Schichtbereich 9 zusätzlich während des Biegevorganges mit einem über seine als Rückenaussenseite vorgesehene Seite gespannten Band an die Faltleiste 21 angepresst werden, wodurch ein ohne ein solches Band möglicherweise an einer Inhomogenitätsstelle der Steifigkeit entstehender Bruch auf jeden Fall ausgeschlossen wird.

Während des « Faltens » bzw. des Biegens des dritten Schichtbereiches 9 über die Faltleiste 21 ergibt sich auf der als Rückeninnenseite vorgesehenen Seite des dritten Schichtbereiches eine Runzelbildung, die dadurch entsteht, dass der oben schon erwähnte Bereich innerhalb des Schichtgefüges, in dem beim Biegen weder Streckungen noch Stauchungen auftreten, fast an der Rückenaussenseite liegt und sich daher die auf der Rückeninnenseite gelegene Seite des zentralen Teiles 13 des dritten Schichtbereiches 9, die vor dem Biegen die gleiche Länge wie die auf der Rückenaussenseite gelegene Seite dieses zentralen Teiles 13 hat, gegenüber der beim Biegen in seiner Länge fast gleichbleibenden Rükkenaussenseite während des Biegevorganges um etwa das 1,2-fache des Schichtdicke 14 verkürzen muss. Die Runzelbildung an der Rückeninnenseite erfolgt dabei an den Stellen, wo das erwähnte lockere Schichtgefüge im Bereich der Rückeninnenseite durch den Biegevorgang zusammengedrückt bzw. verdichtet wird, also an den Stellen geringster Steifigkeit des lockeren Schichtgefüges im Bereich der Rückeninnenseite, und diese Stellen sind natürlich unregelmässig verteilt, so dass sich - wie die in Fig. 5 dargestellte Draufsicht auf einen Ausschnitt der Rückeninnenseite der fertigen Filterschichtanordnung 4 zeigt - eine mit unregelmässigen Fältchen versehene und somit « runzelige » Rükeninnenseite ergibt. Aufgrund dieser natürlichen Bildung der Runzeln an den Stellen geringster Steifigkeit stellen die Runzeln auch keine künstlich verursachten Schwachstellen wie die eingeprägten Faltrillen bei den bekannten Faltschichten dar und bewirken aufgrund der erwähnten Verdichtung des lockeren Schichtgefüges im Bereich der Rückeninnenseite während des Biegevorganges im Gegensatz solchen eingeprägten Faltrillen auch keine Schwächung bzw. keinen Festigkeitsverlust im Rückenbereich der fertigen Filterschichtanordnung 4.

Nach dem « Falten » bzw. nach Beendigung des Biegevorganges hat die gebildete Filterschichtanordnung in ihrem Rückenbereich die in Fig. 3 durch die Faltleiste 21 einerseits und die gestrichelte Linie 22 andererseits angedeutete Querschnittsform. Die gebildete Filterschichtanordnung wird dann zweckmässig in Längsrichtung der Faltleiste 21 von dieser heruntergeschoben oder -gezogen und anschliessend zum Transport gestapelt. Die Stapelung erfolgt dabei so, dass die beiden Filterschichtteile 6 und 7 jeder Filterschichtanordnung 4 unmittelbar aufeinander gelegt werden und die einzelnen Filterschichtanordnungen beim Stapeln so aufeinander gelegt werden, dass die nach dem Biegen etwa die in Fig. 3 angedeutete kreisrunde Form aufweisenden Rückenbereiche der Filterschichtanordnungen 4 abwechselnd nach einer Seite und der gegenüberliegenden Seite aus dem Stapel von aufeinanderliegenden Filterschichtteilen 6 und 7 der übereinander gestapelten Filterschichtanordnungen 4 herausragen. Diese Art der Stapelung ist deswegen empfehlenswert, weil der Durchmesser der etwa kreisrunden Rückenbereiche ungefähr doppelt so gross wie die Dicke der beiden aufeinanderliegenden Filterschichtteile 6 und 7 ist und sich daher mit dieser Art der Stapelung ein nach allen Seiten zu kompakter Stapel ergibt. Das « Falten » bzw. Biegen des Rückens der Filterschichtanordnung erfolgt übrigens - wie schon die vorangehenden Ausführungen über die Stapelung zum Transport zeigen - grundsätzlich schon bei der Herstellung der Filterschichtanordnung (und nicht wie bei einigen bekannten Faltschichten erst beim Verbraucher), was den Vorteil hat, dass erstens die Stapelpakete handlicher als beim Transport im ungefalteten Zustand sind und zweitens dem Verbraucher die bei einigen bekannten Faltschichten recht umständliche Arbeit des Faltens erspart wird.

Beim Verbraucher können die Filterschichtanordnungen 4 dann nacheinander vom Stapel genommen und unmittelbar über die Filterplatten 5 gehängt werden. Nach dem Ueberhängen über die Filterplatten 5 haben die Filterschichtanordnungen 4 in ihrem Rückenbereich die in Fig. 4 gezeigte Querschnittsform. In diesem Zusammenhang ist zu bemerken, dass die nach dem Ueberhängen zunächst noch nicht an der Filterplatte 5 anliegenden Uebergangsbereiche 17 und 18 nach dem Schliessen der Filterpresse fest an der Filterplatte 5 anliegen, weil die Filterschichtteile 6 und 7 an ihren Rändern beim Schliessen der Filterpresse zwischen Pressrahmen und Filterplatte 5 sehr stark zusammengepresst werden. Es gibt daher auch keine Dichtungsprobleme an den oberen Rändern der Filterplatte 5, zumal die Randbreite von Filterplatte 5 und Pressrahmen dort um einiges grösser als die Breite der Bereiche ist, in denen die Filterschichtanordnung 4 beim Ueberhängen über die Filterplatte 5 noch nicht ganz auf der Filterplatte 5 aufliegt.

Abschliessend sei noch darauf hingewiesen, dass im Rahmen von eingehenden Untersuchungen der vorliegenden Filterschichtanordnung auch einige Vergleichsversuche mit anderen marktüblichen, mit Faltrillen versehenen Faltschichten vorgenommen wurden. Dabei stellte sich heraus, dass die Nassfestigkeit (d.h. die Zugkraft pro Längeneinheit des Filterschichtrückens, bei der die Filterschicht abreisst) bei der vorliegenden Filterschichtanordnung mit aufgeklebtem Band um rund 50 % und ohne aufgeklebtem Band noch um rund 20 % höher liegt als bei den marktüblichen, mit Faltrillen versehenen Faltschichten mit aufgeklebtem Band. Ein Vergleich der Nassfestigkeit der vorliegenden Filterschichtanordnung ohne aufgeklebtem Band mit einer den marktüblichen Faltschichten entsprechenden, mit Faltrillen versehenen Faltschicht ohne aufgeklebtem Band war fast nicht mehr möglich, weil in diesem Fall die Nassfestigkeit der mit Faltrillen versehenen Faltschicht so gering war, dass sie nur 3 bis 7 % der Nassfestigkeit der vorliegenden Filterschichtanordnung betrug. Ein Vergleich der Nassfestigkeit von ungepressten Filterschichtzuschnitten 1 mit fertigen Filterschichtanordnungen 4 (beides ohne aufgeklebtem Band) ergab ferner, dass die fertige Filterschichtanordnung 4 im Mittel etwa 85 bis 90 % der Nassfestigkeit des unbehandelten Filterschichtzuschnittes 1 erreicht, dass also beim Pressen und « Falten » der vorliegenden Filterschichtanordnung nahezu kein Festigkeitsverlust auftritt.

**Patentansprüche**

1. Filterschichtanordnung für Filterpressen mit zwei zur Bedeckung von je einer Filterplattenseite vorgesehenen Filterschichtteilen und einer zum Ueberhängen der Filterschichtanordnung übeir eine Filterplatte bzw. einen Filterrahmen vorgesehenen Verbindung zwischen den beiden Filterschichtteilen in Form eines die beiden Filterschichtteile einstückig miteinander verbindenden Rückens, dadurch gekennzeichnet, dass die Filterschichtanordnung (4) im Bereich ihres Rückens (8) über die gesamte Breite desselben auf eine unter der Schichtdicke (14) der Filterschichtteile (6, 7) liegende Dicke zusammengepresst ist.

2. Filterschichtanordnung nach Anspruch 1, dadurch gekennzeichnet, dass die Schichtdicke in den beiden Uebergangsbereichen (17, 18) von den beiden Filterschichtteilen (6, 7) auf einen zentralen Bereich (13) des Rückens (8) unter Ausschluss von sprunghaften Dickenänderungen stetig von der Schichtdicke (14) der beiden Filterschichtteile (6, 7) auf die Dicke im zentralen Bereich (13) des Rückens (8) übergeht.

3. Filterschichtanordnung nach Anspruch 1 oder 2, dadurch gekennzeichnet, dass der Rücken (8) im gebrauchsfertigen, im Querschnitt n-förmigen Zustand der Filterschichtanordnung (4) auf seiner die Rückeninnenseite bildenden Seite runzelig ist, wobei die Vertiefungen der beim Falten der Filterschichtanordnung (4) in diesen im Querschnitt n-förmigen Zustand entstehenden Runzeln in den durch die Schichtstruktur auf der Rückeninnenseite vorgegebenen, die Rückeninnenseite netzartig überziehenden linienhaften Bereichen geringster Steifigkeit der Schichtstruktur auf der Rückeninnenseite liegen, so dass diese natürliche Runzelbildung im Gegensatz zu künstlich angebrachten und infolgedessen auch in die Schichtstrukturbereiche hoher Festigkeit einschneidenden Faltrillen die Festigkeit des Rückens (8) nicht wesentlich beeinflusst.

4. Filterschichtanordnung nach einem der Ansprüche 1 bis 3, dadurch gekennzeichnet, dass auf dem Rücken (8) auf seiner im gebrauchsfertigen Zustand der Filterschichtanordnung (4) die Rückenaussenseite bildenden Seite sowie auf den beiderseits an den Rücken angrenzenden Filterschichtbereichen der beiden Filterschichtteile (6, 7), vorzugsweise mittels eines Klebemittels, ein Band aufgebracht ist, das vorzugsweise von einem aus Polypropylenfasern bestehenden Vlies gebildet ist und vorzugsweise mit einem als Klebemittel dienenden Polyäthylenhaftmittel beschichtet ist.

5. Verfahren zur Herstellung einer Filterschichtanordnung nach einem der Ansprüche 1 bis 4, dadurch gekennzeichnet, dass ein im wesentlichen ebener Filterschichtzuschnitt (1) mit zwei für die beiden Filterschichtteile (6, 7) vorgesehenen Schichtbereichen (2, 3) und einem zwischen diesen beiden Schichtbereichen (2, 3) gelegenen, für den Rücken (8) vorgesehenen dritten Schichtbereich (9) in diesem dritten Schichtbereich (9) über die gesamte Breite (10) desselben in im wesentlichen zur Ebene (11) des Filterschichtzuschnitts (1) senkrechter Richtung (12) zusammengepresst wird.

6. Verfahren nach Anspruch 5, dadurch gekennzeichnet, dass das Zusammenpressen des dritten Schichtbereiches (9) mit einem während des Zusammenpressens stetig bis auf einen mittleren Flächendruck zwischen 50 und 5000 N/cm², vorzugsweise zwischen 500 und 2500 N/cm², anwachsenden Druck erfolgt.

7. Verfahren nach Anspruch 5 oder 6, dadurch gekennzeichnet, dass der dritte Schichtbereich (9) während des Vorganges des Zusammenpressens bis auf eile minimale Dicke im zentralen Teil (13) desselben von weniger als dem 0,6-fachen vorzugsweise von weniger als dem 0,4-fachen, der Schichtdicke (14) in den für die beiden Filterschichtteile (6, 7) vorgesehenen Schichtbereichen (2, 3) zusammengepresst wird.

8. Verfahren nach einem der Ansprüche 5 bis 7, dadurch gekennzeichnet, dass der dritte Schichtbereich (9) gleichzeitig auf seiner gesamten Länge mittels einer Presse, vorzugsweise einer Kurbel- oder Exzenterpresse, zwischen einer auf der als Rückenaussenseite vorgesehenen Seite des dritten Schichtbereiches (9) angeordneten ebenen Auflagefläche (20) von mindestens gleicher Länge und grösserer, vorzugsweise mindestens doppelter Breite wie der (10) des dritten Schichtbereiches (9) und einer auf der als Rückeninnenseite vorgesehenen Seite des dritten Schichtbereiches (9) angeordneten Profilschiene (19) von ebenfalls mindestens gleicher Länge wie der des dritten Schichtbereiches (9) zusammengepresst wird, wobei die der ebenen Auflagefläche (20) zugewandte Seite der Profilschiene (19) in die als Rückeninnenseite vorgesehene Seite des dritten Schichtbereiches (9) eingepresst wird.

9. Verfahren nach einem der Ansprüche 5 bis 7, dadurch gekennzeichnet, dass der dritte Schichtbereich gleichzeitig auf seiner gesamten Länge mittels einer Presse, vorzugsweise einer Kurbel- oder Exzenterpresse, zwischen zwei auf den beiden Seiten des dritten Schichtbereiches angeordneten Profilschienen von jeweils mindestens gleicher Länge wie der des dritten Schichtbereiches zusammengepresst wird, wobei die Profilschienen mit ihren einander zugewandten Seiten in beide Seiten des dritten Schichtbereiches eingepresst werden.

10. Verfahren nach einem der Ansprüche 5 bis 7, dadurch gekennzeichnet, dass der dritte Schichtbereich (9) zwischen einer auf der als Rückeninnenseite vorgesehenen Seite des dritten Schichtbereiches (9) längs des dritten Schichtbereiches (9) ablaufenden Profilrolle (19) von einem vorzugsweise über der 50-fachen Schichtdicke (14) der als Filterschichtteile (6, 7) vorgesehenen Schichtbereiche (2, 3) liegenden Rollendurchmesser und einer Gegenrolle (20) oder einer ebenen Auflagefläche (20) zusammengepresst wird, wobei die der Gegenrolle (20) bzw. der ebenen Auflagefläche (20) zugewandte Seite der Profilrolle (19) in die als Rückeninnenseite vorgesehene Seite des dritten Schichtbereiches (9) eingepresst wird.

11. Verfahren nach einem der Ansprüche 8 bis 10, dadurch gekennzeichnet, dass als in den dritten Schichtbereich (9) einzupressendes Profilelement (19) ein solches verwendet wird, dessen Querschnittsprofil stirnseitig mindestens bis zur Einpresstiefe in den dritten Schichtbereich (9) kantenfrei ist und eine Profillinie aufweist, die im zentralen Teil (13) des dritten Schichtbereiches (9) im wesentlichen parallel zur Ebene (11) des Filterschichtzuschnittes (1) verläuft und in den beiden Uebergangsbereichen (17, 18) vom zentralen Teil (13) des dritten Schichtbereiches (9) zu den an diesen (9) angrenzenden anderen beiden Schichtbereichen (2, 3) zumindest auf einem Teil ihrer im Uebergangsbereich (17, 18) liegenden Länge gekrümmt ist und in diesen Krümmungsbereichen ausschliesslich Krümmungsradien hat, die grösser als die Schichtdicke (14) der als Filterschichtteile (6, 7) vorgesehenen Schichtbereiche (2, 3) und vorzugsweise mindestens gleich dem Doppelten dieser Schichtdicke (14) sind.

**Claims**

1. Filter bed arrangement for filter presses with two filter bed sections for covering one side of a filter plate each and a link between the two filter bed sections in the form of a back linking the two filter bed sections together in one piece for suspending the filter bed arrangement over a filter plate or a filter frame, characterized in that the filter bed arrangement (4) in the region of its back (8) is compressed over the whole width of its back to a thickness smaller than the bed thickness (14) of the filter bed sections (6, 7).

2. Filter bed arrangement according to claim 1, characterized in that the bed thickness in the two transitional regions (17, 18) from the two filter bed sections (6, 7) to a central region (13) of the back (8), changes steadily without abrupt thickness variations from the bed thickness (14) of the two filter bed sections (6, 7) to the thickness in the central region (13) of the back (8).

3. Filter bed arrangement according to claim 1 or 2, characterized in that the back (8), when the filter bed arrangement (4) is ready for use and n-shaped in cross-section, is wrinkled on its side which forms the inside of the back, whereby the recesses of the wrinkles which are formed when the filter bed arrangement (4) is folded into this n-shaped cross-section state, lie on the inside of the back in the line-like regions of least rigidity of the bed structure, which cover the inside of the back like a net and are given by the bed structure of the inside of the back, so that this natural formation of wrinkles as opposed to artificially attached fold grooves which consequently cut into the bed structure regions of great strength, does not substantially affect the strength of the back (8).

4. Filter bed arrangement according to one of claims 1 to 3, characterized in that to the back (8) on its side which forms the external side of the back when the filter bed arrangement (4) is ready for use as well as on the filter bed regions of the two filter bed sections (6, 7) which border both sides of the back, a ribbon is affixed, preferably with the aid of an adhesive, which ribbon is preferably formed of a fleece comprising polypropylene fibres and preferably coated with a polyethylene adhesive serving as the adhesive.

5. Method for producing a filter bed arrangement according to one of claims 1 to 4, characterized in that a substantially plane filter bed blank (1) with two bed regions (2, 3) for the two filter bed sections (6, 7) and a third bed region (9), situated between these two bed regions (2, 3) provided for the back (8), is compressed in this third bed region (9) over the entire width (10) thereof in a direction (12) which is substantially perpendicular to the plane (11) of the filter bed blank (1).

6. Method according to claim 5, characterized in that the compression of the third bed region (9) occurs with a steadily increasing pressure during compression, to an average surface pressure of between 50 and 5000 N/sq.cm, preferably between 500 and 2500 N/sq.cm.

7. Method according to claims 5 or 6, characterized in that during the process of compression, the third bed region (9) is compresed to a minimum thickness in its central section (13) of less than 0.6 times, preferably less than 0.4 times the bed thickness (14) in the bed regions (2, 3) provided for the two filter bed sections (6, 7).

8. Method according to one of claims 5 to 7, characterized in that the third bed region (9) is compressed simultaneously over its entire length by means of a press, preferably a crank or eccentric press, between a plane supporting surface (20) which is arranged on the side of the third bed region (9) provided as the external side of the back and is at least equal in length to the third bed region (9) and of a greater width, preferably of at least double the width (10) of the third bed region (9) and a profile track (19) arranged on the side of the third bed region (9) provided as the inside of the back, of likewise at least equal length to that of the third bed region (9), whereby the side of the profile track (19) facing the plane supporting surface (20) is pressed into the side of the third bed region (9) provided as the inside of the back.

9. Method according to one of claims 5 to 7, characterized in that the third bed region is compressed simultaneously over its entire length by means of a press, preferably a crank or eccentric press, between two profile tracks arranged on the two sides of the third bed region, each profile track being of at least equal length to that of the third bed region, whereby the profile tracks with their sides facing each other are pressed into both sides of the third bed region.

10. Method according to one of claims 5 to 7, characterized in that the third bed region (9) is compressed between a profile roll (19) which runs along the third bed region (9) on the side of the third bed region (9) provided as the inside of the back and has a roll diameter of preferably over 50 times the bed thickness (14) of the bed regions (2, 3) provided as filter bed sections (6, 7), and a counter roll (20) or a plane supporting surface (20), whereby the side of the profile roll (19) facing the counter roll (20) or the plane supporting surface (20) is pressed into the side of the third bed region (9) provided as the inside of the back.

11. Method according to one of claims 8 to 10, characterized in that the kind of profile element (19) to be used for pressing into the third bed region (9) has a front-end cross-section which is edgeless to at least the depth of impression into the third bed region (9) and which exhibits a profile line which, in the central section (13) of the third bed region (9), runs substantially parallel to the plane (11) of the filter bed blank (1) and is curved in the two transitional regions (17, 18) from the central section (13) of the third bed region (9) to the other two bed regions (2, 3) adjoining it (9) on at least part of its length lying in the transitional region (17, 18) and has exclusively radii of curvature in these regions of curvature, which are greater than the bed thickness (14) of the bed regions (2, 3) intended as filter bed sections (6, 7) and are preferably at least equal to twice this bed thickness (14).

**Revendications**

1. Structure de couche filtrante pour filtres-presses avec deux parties de couche filtrante prévues pour recouvrir chacune un côté de plaque filtrante et avec une liaison prévue pour surplomber la structure de couche filtrante au-dessus d'une plaque filtrante ou d'un cadre filtrant, cette liaison étant disposée entre les deux parties de couche filtrante sous forme d'un dos reliant ensemble d'une seule pièce les deux parties de couche filtrante, caractérisée en ce que la structure de couche filtrante (4) est comprimée dans le domaine de son dos (8) sur toute la largeur de celui-ci jusqu'à une épaisseur inférieure à l'épaisseur de la couche (14) des parties de couche filtrante (6, 7).

2. Structure de couche filtrante selon la revendication 1, caractérisée en ce que l'épaisseur de la couche dans les deux zones de transition (17, 18) entre les deux parties de couche filtrante (6, 7) et un domaine central (13) du dos (8) passe continuellement, à l'exclusion de modification d'épaisseur par degrés, de l'épaisseur de la couche (14) des deux parties de couche filtrante (6, 7) à l'épaisseur de la zone centrale (13) du dos (8).

3. Structure de couche filtrante selon les revendications 1 ou 2, caractérisée en ce que le dos (8) est ridé sur son côté formant le côté interne du dos, dans l'état prêt à l'emploi en forme de n en coupe transversale de la structure de couche filtrante (4), les cavités des rides apparaissant lors du pliage de la structure de couche filtrante (4) dans cet état en forme de n en section transversale se trouvant dans les zones en forme de ligne qui sont pré-définies sur le côté interne du dos par la structure de la couche, qui recouvrent en forme de réseau le côté interne du dos et qui correspondent à une rigidité plus faible de la structure de couche, de sorte que cette formation naturelle de rides n'influence pas de façon sensible la solidité du dos contrairement à des rainures de pliage provoquées de façon artificielle et de ce fait entaillant également les zones de la structure de couche de plus grande solidité.

4. Structure de couche filtrante selon l'une des revendications 1 à 3, caractérisée en ce que sur le côté formant le côté externe du dos, dans l'état prêt à l'emploi de la structure de couche filtrante (4) ainsi que sur les zones de la couche filtrante des deux parties de couche filtrante (6, 7) qui limitent le dos des deux côtés, une bande est apportée, de préférence au moyen d'un adhésif, cette bande étant de préférence constituée par un non-tissé constitué par des fibres de polypropylène qui est de préférence recouvert d'un adhésif de polyéthylène qui sert d'adhésif.

5. Procédé pour la fabrication d'une structure de couche filtrante selon l'une des revendications 1 à 4, caractérisé en ce qu'une pièce découpée de couche filtrante (1) sensiblement plane avec des zones de couche (2, 3) prévues pour les deux parties de couche filtrante (6, 7) et une troisième zone de couche (9) prévue pour le dos (8) entre ces deux zones de couche (2, 3), est comprimée dans cette troisième zone de couche (9) sur toute la largeur (10) de celle-ci suivant une direction verticale (12) sensiblement dirigée vers le plan (11) de la pièce découpée de couche filtrante (1).

6. Procédé selon la revendication 5, caractérisé en ce que la compression de la troisième zone de couche (9) se fait au moyen d'une pression qui augmente continuellement au cours de la compression jusqu'à une pression de surface moyenne comprise entre 50 et 5000 N/cm², de préférence entre 500 et 2500 N/cm².

7. Procédé selon la revendication 5 ou 6, caractérisé en ce que la troisième zone de couche (9) est comprimée au cours du processus de compression jusqu'à une épaisseur minimale dans la partie centrale (13) de celle-ci, inférieure à 0,6 fois, de préférence inférieure à 0,4 fois l'épaisseur de couche (14) dans les zones de couche (2, 3) prévues pour les deux parties de couche filtrante (6, 7).

8. Procédé selon l'une des revendications 5 à 7, caractérisé en ce que la troisième zone de couche (9) est comprimée simultanément sur toute sa longueur au moyen d'une presse, de préférence d'une presse à manivelle ou d'une presse à excentrique, entre une surface d'appui (20) plane située entre un côté prévu comme côté externe du dos de la troisième zone de couche (9) de longueur au moins égale et de largeur supérieure, de préférence au moins double de celle (10) de la troisième zone de couche (9) et entre une barre profilée (19) disposée sur le côté prévu comme côté interne du dos de la troisième zone de couche (9) de longueur au moins égale à celle de la troisième zone de couche (9), le côté de la barre profilée (19) tourné vers la surface d'appui (20) plane étant comprimé dans le côté prévu comme côté interne du dos de la troisième zone de couche (9).

9. Procédé selon l'une des revendications 5 à 7, caractérisé en ce que la troisième zone de couche est comprimée simultanément sur toute sa longueur au moyen d'une presse, de préférence d'une presse à manivelle ou d'une presse à excentrique, entre deux barres profilées disposées de chaque côté de la troisième zone de couche, chacune de longueur au moins égale à celle de la troisième zone de couche, les deux barres profilées étant comprimées avec leurs côtés tournés l'un vers l'autre en direction des deux côtés de la troisième zone de couche.

10. Procédé selon l'une des revendications 5 à 7, caractérisé en ce que la troisième zone de couche (9) est comprimée entre un cylindre profilé (19) qui s'étend sur le côté prévu comme côté interne du dos de la troisième zone de couche (9) le long de la troisième zone de couche (9), et dont le diamètre est de préférence supérieur à 50 fois l'épaisseur de la couche (14) des zones de couche (2, 3) prévues comme parties de couche filtrante (6, 7), et un contre-cylindre (20) ou une surface d'appui plane (20), le côté du cylindre profilé (19) qui est tourné vers le contre-cylindre (20) ou la surface d'appui (20) plane étant comprimé en direction du côté prévu comme côté interne du dos de la troisième zone de couche (9).

11. Procédé selon l'une des revendications 8 à 10, caractérisé en ce que, en tant qu'élément profilé (19) à comprimer dans la troisième zone de couche (9), un élément est utilisé dont le profil en coupe transversale est dépourvu d'arêtes du côté frontal au moins jusqu'à la profondeur de compression dans la troisième zone de couche (9) et présente une ligne de profil qui s'étend sensiblement parallèlement au plan (11) de la pièce découpée de couche filtrante (1) dans la partie centrale (13) de la troisième zone de couche (9) et qui est courbée dans les deux zones de transition (17, 18) depuis la partie centrale (13) de la troisième zone de couche (9) jusqu'aux deux autres zones de couche (2, 3) contiguës à celle-ci (9), au moins sur une partie de celle-ci, et qui, dans ces zones de courbure, présente exclusivement des rayons de courbure qui sont supérieurs à l'épaisseur de couche (14) des zones de couche (2, 3) prévues comme parties de couche filtrante (6, 7) et qui sont de préférence au moins égaux au double de cette épaisseur de couche (14).

0 227 847

*Fig. 1*

*Fig. 2*

*Fig. 4*

*Fig. 3*

*Fig. 5*